# EUROPÄISCHE PATENTANMELDUNG

(11) **EP 3 722 250 A1**
(43) Veröffentlichungstag der Anmeldung: **14.10.2020**
(21) Anmeldenummer: 20167955.2
(22) Anmeldetag: 03.04.2020
(51) Int. Cl.: B67B 3/00, B67C 7/00

(54) **VERFAHREN UND VORRICHTUNG ZUM VERSCHLIESSEN VON BEHÄLTERN MIT BEHÄLTERVERSCHLÜSSEN**

(30) Priorität: 03.04.2019 DE 102019108683
(71) Anmelder: KRONES AG, 93073 Neutraubling (DE)
(72) Erfinder: Soellner, Juergen, 93073 Neutraubling (DE)
(74) Vertreter: Nordmeyer, Philipp Werner

(57) **Zusammenfassung**

Vorrichtung zum Verschließen eines Behälters mit einem Behälterverschluss, beispielsweise in einer Getränkeabfüllanlage (1), aufweisend: einen Isolator (50) zur Bereitstellung einer definierten Atmosphäre in dessen Innenraum; einen in dem Isolator (50) angeordneten Verschließer (30) zum Verschließen eines Behälters mit einem Behälterverschluss; und eine Verschlussherstellungsvorrichtung (40) zur Herstellung von Behälterverschlüssen aus einer heißen Schmelze, beispielsweise einer Kunststoffschmelze; wobei die Verschlussherstellungsvorrichtung (40) außerhalb des Isolators (50) angeordnet ist und die Verschlussherstellungsvorrichtung (40) mit dem Isolator verblockt ist oder über einen Verschlusstransporttunnel (43) mit dem Isolator (50) verbunden ist, um hergestellte Behälterverschlüsse dem Verschließer (30) zuzuführen.

## Beschreibung

### Technisches Gebiet

Die vorliegende Erfindung betrifft eine Vorrichtung sowie ein Verfahren zum Verschließen von Behältern mit Behälterverschlüssen, vorzugsweise in einer Getränkeabfüllanlage.

### Stand der Technik

Bestimmte Füllprodukte fordern eine im Wesentlichen sterile Abfüllung, um die Produktsicherheit zu gewährleisten und die Haltbarkeit des abgefüllten Füllprodukts sicher zu stellen. Eine solche sterile beziehungsweise keimarme oder keimfreie Abfüllung und die damit verbundenen Abfüllanlagen werden auch als "aseptische Abfüllung" beziehungsweise als "aseptische Abfüllanlage" bezeichnet.

Um die aseptische Abfüllung zu ermöglichen, erfolgt die Behandlung von zu befüllenden Behältern wie etwa das Blasformen, Rinsen, Transportieren, Befüllen und Verschließen, je nach Anwendung zumindest teilweise in Reinräumen, die auch als "Isolatoren" bezeichnet werden. In den Reinräumen wird - beispielsweise über Filter und/oder das Zuführen eines Gases - eine kontrollierte Atmosphäre bereitgestellt, um entsprechend der jeweiligen produktspezifischen Vorgaben eine keimfreie oder zumindest ausreichend keimarme und partikelarme Atmosphäre bereitzustellen.

Nach der Herstellung der Verschlüsse werden diese herkömmlich zunächst als Schüttgut in Transportbehältern gelagert und transportiert. Für die Weiterverarbeitung müssen die Verschlüsse aufwendig vereinzelt und sortiert werden. Dafür erforderliche Maschinen sind baulich komplex, wartungs- und ressourcenintensiv. Während der Lagerung, des Transports sowie der Vereinzelung der Verschlüsse sind diese Umweltbedingungen ausgesetzt, wodurch die Verschlüsse verunreinigt werden können. Insbesondere können sich mikrobiologische Keime auf den Verschlüssen absetzen, die später durch eine Sterilisation aufwendig entfernt oder abgetötet werden müssen. Ein dafür geeigneter Verschlusssterilisator erhöht die bauliche Komplexität der Verschließeranlage, ist energie- sowie kostenintensiv. Es kommt hinzu, dass es bei der Verarbeitung der Verschlüsse, etwa beim Sortieren und Transport, zu Abrieb zwischen den Verschlüssen kommen kann. Solche Abriebpartikel sowie etwaige andere Fremdkörper können mitgeschleppt werden und so in den zu befüllenden Behälter geraten.

Um Behälter unter aseptischen Bedingungen zu verschließen ist es entsprechend bekannt, die Verschlüsse vor dem Aufbringen auf die befüllten Behälter zu reinigen und gegebenenfalls zu sterilisieren. Nach dem Sterilisationsschritt werden die Verschlüsse im Isolator unter aseptischen Bedingungen auf den jeweiligen zu verschließenden Behälter appliziert.

### Darstellung der Erfindung

Eine Aufgabe der vorliegenden Erfindung besteht darin, eine verbesserte Vorrichtung und ein verbessertes Verfahren zum Verschließen von Behältern mit Behälterverschlüssen, insbesondere in einer Getränkeabfüllanlage, anzugeben.

Die Aufgabe wird durch eine Vorrichtung mit den Merkmalen des Anspruchs 1, einer Getränkeabfüllanlage mit den Merkmalen des Anspruchs 9 sowie einem Verfahren mit den Merkmalen des Anspruchs 12 gelöst. Vorteilhafte Weiterbildungen folgen aus den Unteransprüchen, der folgenden Darstellung der Erfindung sowie der Beschreibung bevorzugter Ausführungsbeispiele.

Entsprechend wird eine Vorrichtung zum Verschließen eines Behälters mit einem Behälterverschluss, beispielsweise in einer Getränkeabfüllanlage, vorgeschlagen. Die Vorrichtung umfasst einen Isolator zur Bereitstellung einer definierten Atmosphäre in dessen Innenraum sowie einen in dem Isolator angeordneten Verschließer zum Verschließen eines Behälters mit einem Behälterverschluss. Weiterhin umfasst die Vorrichtung eine Verschlussherstellungsvorrichtung zur Herstellung von Behälterverschlüssen aus einer heißen Schmelze, beispielsweise einer Kunststoffschmelze. Dabei ist die Verschlussherstellungsvorrichtung außerhalb des Isolators angeordnet und die Verschlussherstellungsvorrichtung ist mit dem Isolator verblockt oder ist über einen Verschlusstransporttunnel mit dem Isolator verbunden, um hergestellte Behälterverschlüsse dem Verschließer zuzuführen.

Indem die Behälterverschlüsse durch die Herstellung synergetisch sterilisiert werden und dieser Zustand durch die Nähe zum Isolator (verblockt oder Verschlusstransporttunnel) beziehungsweise die nicht stattfindende Exposition durch Verschmutzungen aufrechterhalten wird, ist es nicht erforderlich, die Behälterverschlüsse vor dem Verschließen der zu verschließenden Behälter erneut zu sterilisieren. Die Behälterverschlüsse sind durch die vorgeschlagene Anordnung stets sauber und keimfrei.

Sie müssen zudem nicht gelagert werden, wodurch etwaige Transportmittel, wie etwa Transportboxen, entfallen. Wenn die Behälterverschlüsse einzeln ausgeformt werden und in einer Rundläufervorrichtung hergestellt werden, welche die gleiche Teilung aufweist, wie der Verschließer, müssen diese nicht erneut vereinzelt und/oder sortiert und/oder ausgerichtet werden, sondern die hergestellten Behälterverschlüsse können von der Verschlussherstellungsvorrichtung direkt in der richtigen Ausrichtung und in der richtigen Teilung zugeführt werden, wodurch sich die maschinenbauliche Komplexität einer mit der erfindungsgemäßen Vorrichtung ausgestatteten Getränkeabfüllanlage reduziert. So können Mittel zur Verschlussförderung, Sortierwerk(e), Sensoren, wie etwa Kameras, usw. entfallen. Eine etwaige Verschlussinspektion zur Detektion von Herstellungsfehlern, Verunreinigungen usw. ist in der Verschlussherstellungsvorrichtung, insbesondere einem bevorzugten Rundläufer, einfach integrierbar.

Werden die Behälterverschlüsse unmittelbar einem Verschließer zum Verschließen von Behältern übergeben, entspricht die Teilung des Verschließers vorzugsweise der Teilung der Verschlussherstellungsvorrichtung; d.h. die Taktraten stimmen überein, so dass die einzelnen Behälterverschlüsse problemlos einem entsprechenden Behälter zugeordnet und auf diesen aufgebracht werden können. Ebenso wird vorzugsweise die Orientierung, d.h. Ausrichtung, der Behälterverschlüsse von der Herstellung bis zum Aufbringen beibehalten.

Das Rohmaterial wird vorzugsweise in der Verschlussherstellungsvorrichtung zu einer Schmelze erhitzt, wobei hierbei insbesondere Temperaturen zur Anwendung kommen, die eine zusätzliche Sterilisation des Rohmaterials und der daraus hergestellten Behälterverschlüsse nicht erfordern. Die Schmelze zur Herstellung der Behälterverschlüsse ist somit vorzugsweise so heiß, dass im Wesentlichen keine mikrobiologischen Keime (Sporen und/oder vegetative Keime) diesen Prozess überstehen können, so dass die Behälterverschlüsse nach der Ausformung in der Verschlussausformungseinrichtung im Wesentlichen steril sind.

Vorzugsweise ist eine Vorrichtung zur Sterilisierung der Verschlussherstellung vorgesehen, die eingerichtet ist, um die Verschlussherstellungsvorrichtung mit einem sterilisierenden Gas zu beaufschlagen. Hierbei ist eine vollständige und teilweise Beaufschlagung der Verschlussherstellungsvorrichtung, insbesondere einer Verschlussausformungseinrichtung, umfasst. Somit kann die durch die Herstellung der Behälterverschlüsse erzeugte Sterilität besonders zuverlässig erzielt und beibehalten werden. Ist ein Verschlusstransporttunnel vorhanden, durch den die Behälterverschlüsse von der Verschlussausformungseinrichtung in den Isolator transportiert werden, wird das sterilisierende Gas besonders bevorzugt auf den Verschlusstransporttunnel aufgebracht.

Vorzugsweise weist die Vorrichtung zur Sterilisierung der Verschlussherstellung eine oder mehrere Düsen auf, die so eingerichtet sind, dass diese einen Gasstrom des sterilisierenden Gases zumindest auf einen Abschnitt der Verschlussherstellungsvorrichtung, vorzugsweise die Verschlussausformungseinrichtung, richten. Somit wird die Sterilität der Behälterverschlüsse, erzeugt durch deren Herstellung, wirksam beibehalten, indem etwaige von außen eindringende Keime abgetötet werden, wodurch die sterilen Behälterverschlüsse nicht kontaminiert werden.

Vorzugsweise umfasst das sterilisierende Gas H₂O₂, etwa in einer Konzentration im Bereich von 100ppm bis 200ppm, besonders bevorzugt von etwa 150ppm. Das Gas ist in diesen Konzentrationen nicht korrosiv und kann somit problemlos, insbesondere auch permanent, auf die Verschlussherstellungsvorrichtung abgelassen werden.

Vorzugsweise ist die Vorrichtung zur Sterilisierung der Verschlussherstellung eingerichtet, um die Verschlussherstellungsvorrichtung während der Herstellung der Behälterverschlüsse, vorzugsweise kontinuierlich, mit dem sterilisierenden Gas zu beaufschlagen, wodurch die durch die Herstellung der Behälterverschlüsse erzeugte Sterilität beispielsweise auch dann zuverlässig aufrechterhalten werden kann, wenn sich die Verschlussherstellungsvorrichtung außerhalb eines Isolators befindet.

Vorzugsweise ist die Vorrichtung zur Sterilisierung der Verschlussherstellung eingerichtet, um die Verschlussherstellungsvorrichtung (zeitlich) außerhalb der Herstellung der Behälterverschlüsse, d.h. etwa vor Inbetriebnahme oder während einer Unterbrechung des regulären Betriebs, mit dem sterilisierenden Gas zu beaufschlagen. Der "reguläre Betrieb" bezeichnet hierin den Arbeitszustand der Verschlussherstellungsvorrichtung, in dem diese regulär Behälterverschlüsse herstellt und abtransportiert, etwa an einen Verschließer einer Getränkeabfüllanlage. Gemäß dieser Ausführungsform wird die Verschlussherstellungsvorrichtung außerhalb des regulären Betriebs sterilisiert und anschließend, während des regulären Betriebs vorzugsweise mit Sterilluft eines Isolators überlagert, wodurch auf eine permanente aktive Beaufschlagung durch die Vorrichtung zur Sterilisierung der Verschlussherstellung verzichtet werden kann und somit Energie und Ressourcen eingespart werden können.

Der Isolator enthält vorzugsweise ebenso einen Verschließer zum Verschließen der Behälter mit den Behälterverschlüssen. Der Isolator kann eine Luftschleuse und einen gegenüber der äußeren Umgebung erhöhten Innendruck von Sterilluft oder Reinluft und/oder einem weiteren Gas aufweisen, um durch einen nach außen gerichteten Luftstrom sicherzustellen, dass keine Verunreinigungen von außen in den Isolator eindringen können. Durch den Isolator kann die Sterilität der Behälterverschlüsse nach der Herstellung aufrechterhalten werden, ohne dass eine gesonderte, nachträgliche Sterilisierung erforderlich ist.

Vorzugsweise ist die Verschlussherstellungsvorrichtung als Rundläufermaschine ausgeführt. Da die Behälterverschlüsse in diesem Fall einzeln ausgeformt werden und während der Herstellung bereits in der Teilung vorliegen, die von dem Verschließer gefordert ist, können diese sofort zu einem etwaigen Verschließer abtransportiert werden, ohne dass diese erneut vereinzelt und/oder sortiert werden müssen.

Die oben dargelegte Aufgabe wird ferner durch eine Getränkeabfüllanlage gelöst, die einen Füller zum Befüllen von Behältern mit einem Getränk, eine Vorrichtung zum Verschließen eines befüllten Behälters mit einem Behälterverschluss gemäß einer der vorstehend dargelegten Ausführungsvarianten und einen Verschließer zum Verschließen der befüllten Behälter mit den Behälterverschlüssen aufweist.

Die technischen Wirkungen, Vorteile sowie Ausführungsformen, die vorstehend in Bezug auf die Vorrichtung zur Herstellung und Sterilisation von Behälterverschlüssen beschrieben wurden, gelten analog für die Getränkeabfüllanlage.

So kann durch die Sterilisierung der Verschlussherstellung aus den obigen Gründen die maschinenbauliche Komplexität der Getränkeabfüllanlage reduziert werden. Mittel zur Verschlussförderung, Sortierwerk(e), Sensoren, wie etwa Kameras, usw. können entfallen.

Die Verschlussherstellungsvorrichtung kann außerhalb des regulären Betriebs sterilisiert werden und anschließend, während des regulären Betriebs mit Sterilluft des Isolators überlagert werden, wodurch auf eine permanente aktive Beaufschlagung durch die Vorrichtung zur Sterilisierung der Verschlussherstellung verzichtet werden kann und somit Energie und Ressourcen eingespart werden können.

Die oben dargelegte Aufgabe wird ferner durch ein Verfahren gelöst, das zum Verschließen von zu verschließenden Behältern mit einem Behälterverschluss eingerichtet ist. Das Verfahren weist auf: Erzeugen einer keimfreien oder keimarmen Atmosphäre in einem Reinraum eines Isolators; Herstellen von Behälterverschlüssen aus einer heißen Schmelze, vorzugsweise Kunststoffschmelze, in einer Verschlussausformungseinrichtung einer Verschlussherstellungsvorrichtung, wobei die Verschlussausformungseinrichtung außerhalb des Isolators angeordnet und mit diesem verblockt oder über einen Verschlusstransporttunnel für den Transport der Behälterverschlüsse in den Isolator an diesen angebunden ist; und Transportieren der Behälterverschlüsse in den Isolator.

Die technischen Wirkungen, Vorteile sowie Ausführungsformen, die vorstehend in Bezug auf die Vorrichtung zur Herstellung und Sterilisation von Behälterverschlüssen sowie der Getränkeabfüllanlage beschrieben wurden, gelten analog für das Verfahren.

So umfasst das Verfahren ferner ein Sterilisieren der Verschlussherstellungsvorrichtung durch Beaufschlagen zumindest eines Teils derselben mit einem sterilisierenden Gas, wodurch die durch die Herstellung der Behälterverschlüsse erzeugte Sterilität besonders zuverlässig erzielt und beibehalten werden kann. Ist ein Verschlusstransporttunnel vorhanden, durch den die Behälterverschlüsse von der Verschlussausformungseinrichtung in den Isolator transportiert werden, wird das sterilisierende Gas besonders bevorzugt auf den Verschlusstransporttunnel aufgebracht.

Vorzugsweise umfasst das sterilisierende Gas H₂O₂, etwa in einer Konzentration im Bereich von 100ppm bis 200ppm, besonders bevorzugt von etwa 150ppm. Das Gas ist in diesen Konzentrationen nicht korrosiv und kann somit problemlos, insbesondere auch permanent, auf die Verschlussherstellungsvorrichtung abgelassen werden.

Vorzugsweise wird die Verschlussherstellungsvorrichtung während der Herstellung der Behälterverschlüsse, vorzugsweise kontinuierlich, mit dem sterilisierenden Gas beaufschlagt. Alternativ oder zusätzlich kann die Verschlussherstellungsvorrichtung aus den oben genannten Gründen (zeitlich) außerhalb der Herstellung der Behälterverschlüsse mit dem sterilisierenden Gas beaufschlagt werden.

Vorzugsweise werden die hergestellten Behälterverschlüsse an einen Verschließer zum Verschließen von Behältern mit den Behälterverschlüssen transportiert. Dabei durchlaufen die Behälterverschlüsse gemäß einem besonders bevorzugten Ausführungsbeispiel kein Sortierwerk und/oder keine Vorrichtung zur Sterilisierung der Behälterverschlüsse und/oder keine Vereinzelungsvorrichtung, da dies im Falle der synergetischen Sterilisierung durch die Herstellung und Aufrechterhaltung der Sterilität der Behälterverschlüsse durch die Sterilisierung der Verschlussherstellungsvorrichtung entfallen kann, insbesondere wenn diese als Rundläufermaschine ausgeführt ist.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei ist
- Figur 1: eine schematische Darstellung einer Anlage zur Herstellung, zum Abfüllen und Verschließen von Behältern;
- Figur 2: eine schematische Darstellung einer Anlage zur Herstellung, zum Abfüllen und Verschließen von Behältern gemäß einem weiteren Ausführungsbeispiel; und
- Figur 3: eine schematische Darstellung einer Anlage zur Herstellung, zum Abfüllen und Verschließen von Behältern gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholte Beschreibung dieser Elemente wird teilweise verzichtet, um Redundanzen zu vermeiden.

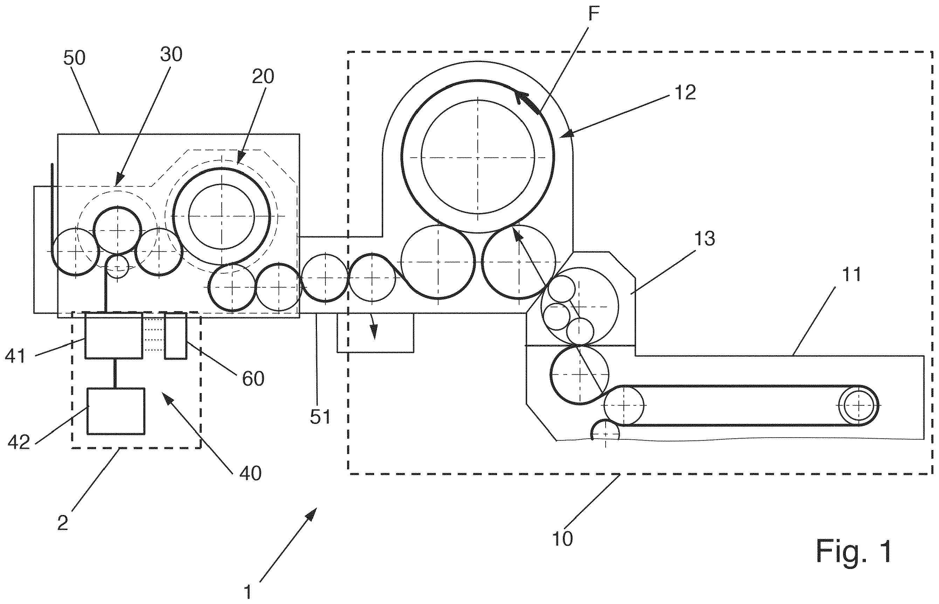

Die Figuren 1 bis 3 sind schematische Darstellungen einer Getränkeabfüllanlage 1, insbesondere einer Anlage zur Herstellung, zum Abfüllen und Verschließen von Behältern, gemäß verschiedenen Ausführungsbeispielen.

Die Getränkeabfüllanlage 1 weist auf: eine Vorrichtung 10 zur Herstellung von Behältern, hierin auch als "Behätterherstettungsvorrichtung" bezeichnet; eine Vorrichtung 20 zum Befüllen der Behälter, hierin auch als "Füller" bezeichnet; eine Vorrichtung 30 zum Verschließen von Behältern mit Behälterverschlüssen, hierin auch als "Verschließer" bezeichnet; sowie eine Vorrichtung 40 zur Herstellung von Behälterverschlüssen, hierin auch als "Verschlussherstellungsvorrichtung" bezeichnet.

Die Getränkeabfüllanlage 1 weist somit mehrere Stationen auf, die von der Herstellung der Behälter über die Befüllung bis zum Verschließen derselben sukzessive durchlaufen werden. Zu diesem Zweck werden die Behälter beziehungsweise deren Vorformlinge (auch als "Preform" bezeichnet - eine Vorstufe der Behälter vor dem Blasformen oder Streckblasformen) entlang eines Förderwegs F transportiert, indem diese durch Transportsterne transportiert und entsprechend von einem Transportstern zum nächsten übergeben werden. Vorformlinge, Behälter, Behälterverschlüsse sowie dafür eingerichtete Halterungen/Klammern an den Transportsternen sind der Übersichtlichkeit halber in den Figuren 1 bis 3 nicht dargestellt. Die Transportsterne können allein der Förderung dienen oder können mit Behandlungseinrichtungen entsprechend den Stationen ausgestattet sein.

Es sei darauf hingewiesen, dass die hierin gezeigten Stationen nur beispielhaft sind. So kann die Getränkeabfüllanlage 1 mit weiteren oder alternativen Bearbeitungsstationen, wie etwa einer Etikettiervorrichtung, einer Reinigungsvorrichtung usw., ausgestattet sein. Ebenso können Stationen entfallen, wie etwa die Behälterherstellungsvorrichtung 10, wenn die Behälter bereits in der endgültigen, zu befüllenden Form angeliefert werden.

Die Behälterherstellungsvorrichtung 10 weist eine Einrichtung 11 zum Vorbereiten und Vorwärmen der Vorformlinge auf. Die so vorbereiteten Vorformlinge werden an eine Blaseinrichtung 12 übergeben, in der die erwärmten Vorformlinge durch Blasen oder Streckblasen zu den zu befüllenden Behältern expandiert werden. Zu diesem Zweck werden die Vorformlinge in Blasformen, deren Hohlraumkontur der beabsichtigten Behälteraußenform entspricht, mit einem Gas unter Druck beaufschlagt und beim Streckblasen auch mit einer Streckstange gedehnt, um die Vorformlinge zu Behältern aufzublasen.

Zwischen der Einrichtung 11 und der Blaseinrichtung 12 kann sich eine Sterilisationseinrichtung 13 befinden, die zur Sterilisation der Vorformlinge eingerichtet ist. Die Sterilisationseinrichtung 13 kann zu diesem Zweck beispielsweise Elektronenstrahlung, UV-Strahlung und/oder ein sterilisierendes Gas nutzen. Es sei darauf hingewiesen, dass die Sterilisationseinrichtung 13 in Förderrichtung F auch hinter der Blaseinrichtung 12 angeordnet sein kann oder auch ganz entfallen kann, wenn die Vorformlinge aufgrund der zur Herstellung der Behälter erforderlichen Hitze bereits ausreichend steril sind und dies auf dem Weg zur Weiterbehandlung auch bleiben.

Die Behälter treten im Anschluss an die Blaseinrichtung 12 in einen Isolator 50 ein, in dem eine kontrollierter Atmosphäre vorliegt und der beispielsweise als Sterilluft aufweisender Reinraum eingerichtet ist, damit die nachfolgenden Arbeitsschritte in einer sauberen, keimfreien oder zumindest keimarmen Atmosphäre durchgeführt werden können. Der Isolator 50 kann eine Luftschleuse 51, durch welche die zu befüllenden Behälter in den Isolator 50 eintreten, und einen gegenüber der äußeren Umgebung erhöhten Innendruck aufweisen, um durch einen nach außen gerichteten Gas oder Luftstrom sicherzustellen, dass keine Verunreinigungen von außen in den Isolator 50 eindringen können.

In den hier gezeigten Ausführungsbeispielen befinden sich der Füller 20 und der Verschließer 30 im Isolator 50. Allerdings können beispielsweise auch eine oder mehrere Einrichtungen der Behälterherstellungsvorrichtung 10 im Isolator 50 angeordnet sein.

Im Anschluss an das Blasformen und nach dem Eintritt in den Isolator 50 werden die Behälter mittels des Füllers 20 mit einem Füllprodukt, beispielsweise einem Getränk, befüllt. Das Füllprodukt ist hierbei ebenso vorzugsweise steril. Entsprechend findet eine aseptische Befüllung der zu befüllenden Behälter statt.

Anschließend werden die Behälter im Verschließer 30 verschlossen. Zu diesem Zweck werden die befüllten Behälter über einen oder mehrere Transportsterne innerhalb des Isolators 50 zu dem Verschließer 30 transportiert.

Gleichzeitig werden in einem davon unabhängigen Arbeitsstrang Behälterverschlüsse in der Verschlussherstellungsvorrichtung 40 hergestellt und zum Verschließer 30 transportiert.

Die Verschlussherstellungsvorrichtung 40 stellt Behälterverschlüsse beispielsweise aus einer heißen Kunststoffschmelze her. Dazu kann eine Verschlussausformungseinrichtung 41 vorgesehen sein, in der aus der heißen Kunststoffschmelze beispielsweise durch Spritzguss eine Herstellung der Behälterverschlüsse durchgeführt wird. Die Verschlussausformungseinrichtung 41 ist vorzugsweise als Rundläufermaschine ausgeführt, die in einem gleichen Takt beziehungsweise mit der gleichen Teilung Behälterverschlüsse entformen kann, wie sie von dem Verschließer 30 angefordert werden.

Die Verschlussausformungseinrichtung 41 bezieht das Rohmaterial aus einem Kunststoffvorrat 42, der Teil der Verschlussherstellungsvorrichtung 40, wie in den Figuren 1 bis 3 gezeigt, oder eine separate Einrichtung sein kann. Das Rohmaterial wird beispielsweise in einem Extruder zu einer Schmelze erhitzt, wobei hierbei Temperaturen zur Anwendung kommen, die eine zusätzliche Sterilisation des Rohmaterials und der daraus hergestellten Behälterverschlüsse nicht erfordern.

Vorzugsweise ist die Verschlussherstellungsvorrichtung 40 direkt mit dem Verschließer 30 verblockt, also direkt an diesen angebunden, wie in der Figur 1 gezeigt, so dass die Behälterverschlüsse ohne wesentlichen Transportweg an den Verschließer 30 übergeben werden können.

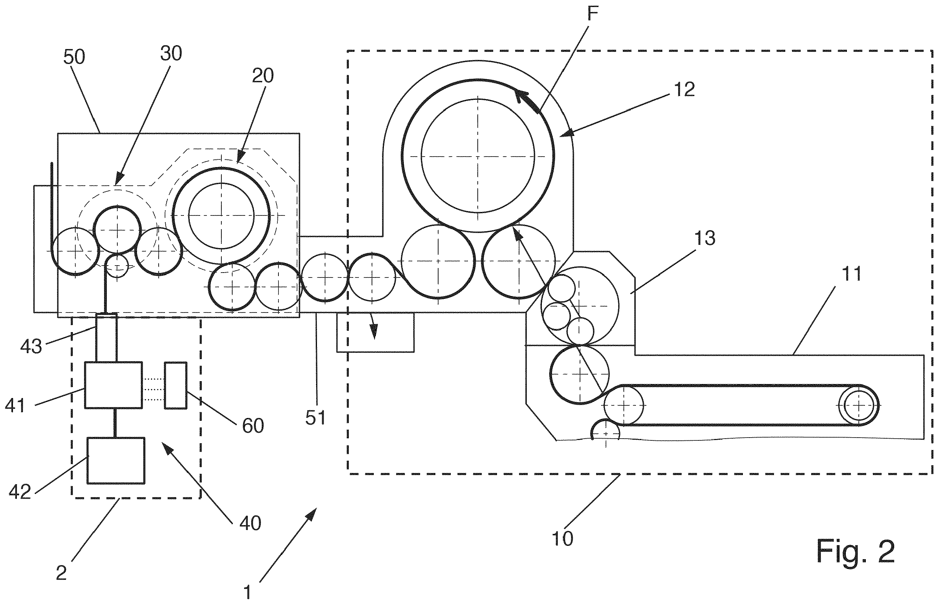

Alternativ werden die ausgeformten Behälterverschlüsse durch einen Verschlusstransporttunnel 43, wie in der Figur 2 gezeigt, zum Verschließer 30 transportiert. Bevorzugt wird in dem Verschlusstransporttunnel 43 ebenfalls eine kontrollierte Atmosphäre bereitgestellt. Die kontrollierte Atmosphäre, beispielsweise eine sterile Atmosphäre, im Innenraum des Verschlusstransporttunnels 43 kann dadurch erzielt werden, dass dieser Innenraum mit dem Isolator 50 in Kontakt steht oder auch Teil des Isolators 50 ist, so dass sich die kontrollierte Atmosphäre des Isolators 50 auch auf den Verschlusstransporttunnel 43 erstreckt.

Die Schmelze zur Herstellung der Behälterverschlüsse ist so heiß, dass im Wesentlichen keine mikrobiologischen Keime (beispielsweise Sporen oder vegetative Keime) diesen Prozess überstehen können, so dass die Behälterverschlüsse nach der Ausformung in der Verschlussausformungseinrichtung 41 im Wesentlichen steril sind.

Die so durch deren Herstellung synergetisch sterilisierten Behälterverschlüsse werden durch die direkte Übergabe in die kontrollierte Atmosphäre des Isolators 50 weiter steril gehalten. Mit anderen Worten kommt es durch die Verblockung oder Anbindung über den Verschlusstransporttunnel 43 nicht zu einer Beaufschlagung der steril hergestellten Behälterverschlüsse mit Keimen oder anderen Belastungen und Verschmutzungen. Vielmehr können die hergestellten Behälterverschlüsse direkt auf die zu verschließenden Behälter aufgebracht werden.

Eine weitere Absicherung der Sterilität der Behälterverschlüsse kann erreicht werden, indem die Verschlussherstellungsvorrichtung 40 vollständig oder zumindest teilweise, jedoch insbesondere die Verschlussausformungseinrichtung 41, mit einem sterilisierenden Gas (z.B. H₂O₂ in einer Konzentration von etwa 150ppm) beaufschlagt wird. Ein sterilisierendes Gas im Bereich solcher Konzentrationen ist nicht korrosiv und kann permanent auf die Verschlussherstellungsvorrichtung 40 abgelassen werden.

Zu diesem Zweck weist die Getränkeabfüllanlage 1 gemäß den Ausführungsbeispielen der Figuren 1 und 2 eine Vorrichtung 60 zur Sterilisierung der Verschlussherstellung auf, die hierin auch als *"Verschlussherstellungssterilisierung"* bezeichnet ist. Die Verschlussherstellungssterilisierung 60 umfasst eine Sterilgasausbringung, die mit sterilisierendem Gas versorgt wird und eine oder mehrere Düsen aufweist, die so auf die Verschlussherstellungsvorrichtung 40 und insbesondere die Verschlussausformungseinrichtung 41, gerichtet ist, dass die Sterilität der Behälterverschlüsse, erzeugt durch deren Herstellung, beibehalten wird.

Etwaige von außen in die Verschlussherstellungsvorrichtung 40 eindringende Keime werden dadurch abgetötet, und die sterilen Behälterverschlüsse werden nicht kontaminiert.

Auch die Transportstrecke der Behälterverschlüsse von der Verschlussausformungseinrichtung 41 zu dem Verschließer 30 kann von der Verschlussherstellungssterilisierung 60 mit sterilisierendem Gas beaufschlagt werden. Damit kann auch diese Transportstrecke steril gehalten werden und etwaige in diese Transportstrecke eindringende Keime können abgetötet werden.

Die Beaufschlagung der Verschlussherstellungsvorrichtung 40, die beispielsweise kontinuierlich stattfindet, erfolgt gemäß diesem Ausführungsbeispiel während der Herstellung der Behälterverschlüsse, insbesondere während des regulären Betriebs der Getränkeabfüllanlage 1. Alternativ kann eine Beaufschlagung der Verschlussherstellungsvorrichtung 40 sowie der Transportstrecke mit dem sterilisierenden Gas auch vor dem regulären Betrieb der Getränkeabfüllanlage 1 und/oder in Betriebspausen stattfinden.

Die bauliche Gruppe, welche die Verschlussherstellungsvorrichtung 40 und die Verschlussherstellungssterilisierung 60 umfasst, ist hierin als "Vorrichtung zur Herstellung und Sterilisation von Behälterverschlüssen" bezeichnet und mit dem Bezugszeichen 2 versehen.

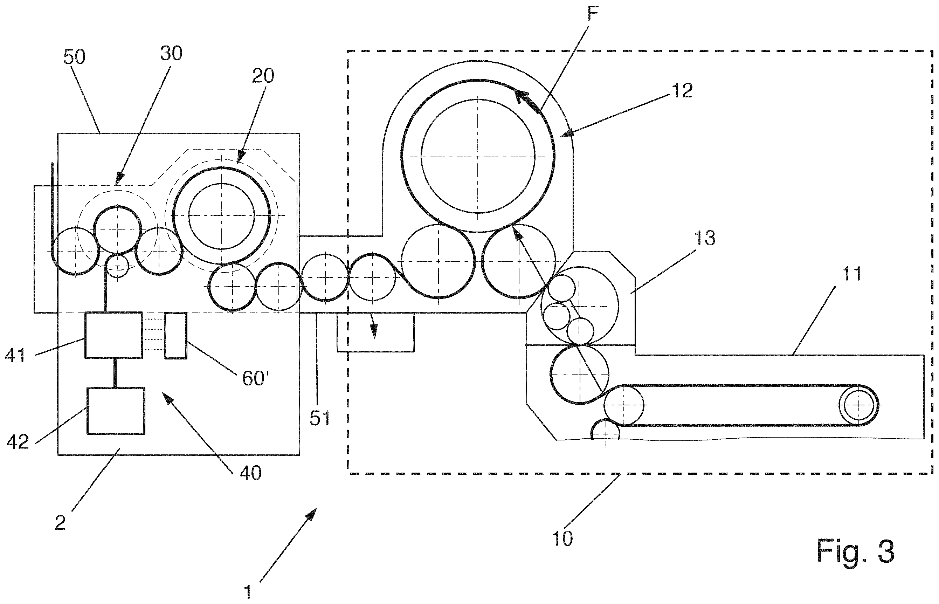

Gemäß einem weiteren Ausführungsbeispiel, das in der Figur 3 dargestellt ist, wird die Verschlussherstellungsvorrichtung 40, insbesondere die Verschlussausformungseinrichtung 41, vor der Produktion, d.h. vor Inbetriebnahme, sterilisiert und anschließend während des regulären Betriebs der Getränkeabfüllanlage 1 mit Sterilluft aus einem Isolator überlagert. Zu diesem Zweck kann sich die Verschlussherstellungsvorrichtung 40 im Isolator 50 (vgl. Figur 2) oder in einem mit diesem verblockten separaten Isolator befinden.

Die Sterilisierung der Verschlussherstellungsvorrichtung 40 zeitlich außerhalb des regulären Betriebs erfolgt mittels einer Verschlussherstellungssterilisierung 60', die beispielsweise im Isolator 50 angeordnet ist. Allerdings befinden sich in diesem Fall die Verschlussherstellungsvorrichtung 40 und die Verschlussherstellungssterilisierung 60' in einer Einhausung, um zu verhindern, dass das sterilisierende Gas auf die Behälterverschlüsse oder in die noch offenen Behälter gerät.

Ist die Verschlussherstellungssterilisierung in einem Isolator angeordnet, wird diese hierin als "interne Verschlussherstellungssterilisierung" 60', andernfalls als "externe Verschlussherstellungssterilisierung" 60 bezeichnet.

Im Unterschied zu den Ausführungsformen der Figuren 1 und 2 ist somit gemäß der Ausführungsform der Figur 2 keine gezielte Beaufschlagung der Verschlussherstellungsvorrichtung 40 mit einem sterilisierenden Gas während des regulären Betriebs der Getränkeabfüllanlage 1 erforderlich. Vielmehr wird die Sterilisation vorgezogen, d.h. vor Inbetriebnahme, oder während einer Unterbrechung des regulären Betriebs durchgeführt und während des Betriebs durch die Atmosphäre im Isolator 50 aufrechterhalten.

Indem die Behälterverschlüsse durch die Herstellung synergetisch sterilisiert werden und dieser sterile Zustand bis zum Aufbringen derselben auf die zu verschließenden Behälter aufrechterhalten wird, beispielsweise unterstützt durch die Verschlussherstellungssterilisierung 60, 60', ist es nicht erforderlich, die Behälterverschlüsse vor dem Aufbringen durch den Verschließer 30 erneut zu sterilisieren. Die Behälterverschlüsse sind stets sauber und keimfrei. Sie müssen zudem nicht gelagert werden, wodurch etwaige Transportmittel, wie etwa Transportboxen, sowie deren Handhabung entfallen.

Da die Behälterverschlüsse einzeln ausgeformt werden, können sie insbesondere in einem Rundläufer während der Herstellung bereits auf Teilung gebracht sein und sofort zum Verschließer 30 transportiert werden. Damit müssen die Behälterverschlüsse nicht erneut vereinzelt und/oder sortiert werden, wodurch sich die maschinenbauliche Komplexität der Getränkeabfüllanlage 1 reduziert. So können Mittel zur Verschlussförderung, Sortierwerk(e), Sensoren, wie etwa Kameras, usw. entfallen. Eine etwaige Verschlussinspektion zur Detektion von Herstellungsfehlern, Verunreinigungen usw. ist in der Verschlussherstellungsvorrichtung 40, insbesondere einem bevorzugten Rundläufer, einfach integrierbar.

Werden die Behälterverschlüsse dem Verschließer 30 übergeben, entspricht die Teilung des Verschließers vorzugsweise der Teilung der Verschlussherstellungsvorrichtung 40. Mit anderen Worten stimmen die Taktraten bevorzugt so überein, dass die einzelnen Behälterverschlüsse problemlos einem entsprechenden Behälter zugeordnet und auf diesen aufgebracht werden können. Ebenso wird vorzugsweise die Orientierung, d.h. Ausrichtung, der Behälterverschlüsse von der Herstellung bis zum Aufbringen beibehalten.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Getränkeabfüllanlage
- 2: Vorrichtung zur Herstellung und Sterilisation von Behälterverschlüssen
- 10: Behälterherstellungsvorrichtung
- 11: Einrichtung zur Herstellung von Vorformlingen
- 12: Blaseinrichtung
- 13: Sterilisationseinrichtung
- 20: Vorrichtung zum Befüllen der Behälter (Füller)
- 30: Vorrichtung zum Verschließen von Behältern mit Behälterverschlüssen (Verschließer)
- 40: Verschlussherstellungsvorrichtung
- 41: Verschlussausformungseinrichtung
- 42: Kunststoffvorrat
- 43: Verschlusstransporttunnel
- 50: Isolator
- 51: Luftschleuse
- 60: (Externe) Vorrichtung zur Sterilisierung der Verschlussherstellung (Verschlussherstellungssterilisierung)
- 60': (Interne) Vorrichtung zur Sterilisierung der Verschlussherstellung (Verschlussherstellungssterilisierung)

- F: Förderrichtung

## Patentansprüche

1. Vorrichtung zum Verschließen eines Behälters mit einem Behälterverschluss, beispielsweise in einer Getränkeabfüllanlage (1), aufweisend:
einen Isolator (50) zur Bereitstellung einer definierten Atmosphäre in dessen Innenraum;
einen in dem Isolator (50) angeordneten Verschließer (30) zum Verschließen eines Behälters mit einem Behälterverschluss; und
eine Verschlussherstellungsvorrichtung (40) zur Herstellung von Behälterverschlüssen aus einer heißen Schmelze, beispielsweise einer Kunststoffschmelze; wobei
die Verschlussherstellungsvorrichtung (40) außerhalb des Isolators (50) angeordnet ist und die Verschlussherstellungsvorrichtung (40) mit dem Isolator verblockt ist oder über einen Verschlusstransporttunnel (43) mit dem Isolator (50) verbunden ist, um hergestellte Behälterverschlüsse dem Verschließer (30) zuzuführen.

2. Vorrichtung nach Anspruch 1, **dadurch gekennzeichnet, dass** eine Vorrichtung (60, 60') zur Sterilisierung der Verschlussherstellungsvorrichtung (40) mit einem sterilisierenden Gas vorgesehen ist.

3. Vorrichtung nach Anspruch 2, **dadurch gekennzeichnet, dass** die Vorrichtung (60, 60') zur Sterilisierung der Verschlussherstellungsvorrichtung (40) eine oder mehrere Düsen aufweist, die so eingerichtet sind, dass diese einen Gasstrom des sterilisierenden Gases zumindest auf einen Abschnitt der Verschlussherstellungsvorrichtung (40) richten.

4. Vorrichtung nach Anspruch 2 oder 3, **dadurch gekennzeichnet, dass** das sterilisierende Gas H₂O₂ umfasst, vorzugsweise in einer Konzentration im Bereich von 100ppm bis 200ppm, besonders bevorzugt von etwa 150ppm.

5. Vorrichtung nach einem der Ansprüche 2 bis 4, **dadurch gekennzeichnet, dass** die Vorrichtung (60, 60') zur Sterilisierung der Verschlussherstellung eingerichtet ist, um die Verschlussherstellungsvorrichtung (40) während der Herstellung der Behälterverschlüsse, vorzugsweise kontinuierlich, mit dem sterilisierenden Gas zu beaufschlagen.

6. Vorrichtung nach einem der Ansprüche 2 bis 5, **dadurch gekennzeichnet, dass** die Vorrichtung (60, 60') zur Sterilisierung der Verschlussherstellungsvorrichtung (40) dazu eingerichtet ist, die Verschlussherstellungsvorrichtung (40) zeitlich außerhalb der Herstellung der Behälterverschlüsse mit dem sterilisierenden Gas zu beaufschlagen.

7. Vorrichtung nach einem der vorigen Ansprüche, **dadurch gekennzeichnet, dass** in dem Isolator (50) ferner ein Füller (20) zum Befüllen eines Behälters mit einem Füllprodukt aufgenommen ist.

8. Vorrichtung nach einem der vorigen Ansprüche, **dadurch gekennzeichnet, dass** die Verschlussherstellungsvorrichtung (40) als Rundläufermaschine ausgeführt ist.

9. Getränkeabfüllanlage (1) mit einem Füller (20) zum Befüllen von Behältern mit einem Getränk und einer Vorrichtung (2) zum Verschließen eines befüllten Behälters mit einem Behälterverschluss gemäß einem der vorstehenden Ansprüche.

10. Getränkeabfüllanlage (1) nach Anspruch 9, **dadurch gekennzeichnet, dass** der Füller (20) im Isolator (50) angeordnet ist.

11. Getränkeabfüllanlage (1) nach einem der Ansprüche 8 bis 10, **dadurch gekennzeichnet, dass** eine Teilung der Verschlussherstellungsvorrichtung (40) einer Teilung des Verschließers (30) entspricht.

12. Verfahren zum Verschließen eines Behälters mit einem Behälterverschluss, beispielsweise in einer Getränkeabfüllanlage (1), aufweisend:
Erzeugen einer kontrollierten Atmosphäre im Innenraum eines Isolators (50);
Herstellen von Behälterverschlüssen aus einer heißen Schmelze, vorzugsweise Kunststoffschmelze, in einer Verschlussherstellungsvorrichtung (40), wobei die Verschlussherstellungsvorrichtung (40) außerhalb des Isolators (50) angeordnet ist und mit dem Isolator (50) verblockt ist oder über einen Verschlusstransporttunnel (43) mit dem Isolator (50) verbunden ist; und
Transportieren der Behälterverschlüsse zu einem in dem Isolator (50) angeordneten Verschließer (30).

13. Verfahren nach Anspruch 12, **dadurch gekennzeichnet, dass** die Verschlussherstellungsvorrichtung (40) durch Beaufschlagen zumindest eines Teils derselben mit einem sterilisierenden Gas sterilisiert wird.

14. Verfahren nach Anspruch 13, **dadurch gekennzeichnet, dass** das sterilisierende Gas H₂O₂ umfasst, vorzugsweise in einer Konzentration im Bereich von 100ppm bis 200ppm, besonders bevorzugt von etwa 150ppm.

15. Verfahren nach einem der Ansprüche 12 bis 14, **dadurch gekennzeichnet, dass** die hergestellten Behälterverschlüsse an den Verschließer (30) zum Verschließen von Behältern mit den Behälterverschlüssen übergeben werden, vorzugsweise ohne ein Sortierwerk und/oder eine Vorrichtung zur Sterilisierung der Behälterverschlüsse und/oder eine Vereinzelungsvorrichtung zu durchlaufen.
